# EUROPEAN PATENT APPLICATION

(11) **EP 4 641 751 A1**
(43) Date of publication of application: **29.10.2025**
(21) Application number: 24216176.8
(22) Date of filing: 28.11.2024
(51) Int. Cl.: H01M 10/42, H01M 50/262, H01M 50/271, H01M 50/289, H01M 50/291, H01M 50/50, H01M 50/529

(54) **BATTERY PACK AND ELECTRONIC DEVICE**

(30) Priority: 23.04.2024 CN 202420853419 U
(71) Applicant: Eve Energy Co., Ltd., Huizhou, Guangdong 516006 (CN)
(72) Inventor: ZHANG, Jun, Huizhou, Guangdong 516006 (CN)
(74) Representative: Herrero & Asociados, S.L.

(57) **Abstract**

A battery pack (100) and an electronic device are provided in the present disclosure. The battery pack (100) includes a box (10), having an accommodating cavity; a locking beam (11), detachably connected to the box (10), wherein the accommodating cavity is partitioned into a module area (41) and an electrical area (42) by the locking beam (11); a battery module (20), arranged in the module area (41); a first cover (31), connected to the box (10) and covering the module area (41); wherein a gap is defined between the locking beam (11) and a bottom of the accommodating cavity, and a wiring harness (21) connected to the battery module (20) passes through the locking beam (11) from below and enters the electrical area (42). In this way, the routing and installation of the wiring harness (21) can be facilitated, thereby improving production efficiency of the battery pack (100).

## Description

### TECHNICAL FIELD

The present disclosure relates to a field of battery technology, in particular to a battery pack and an electronic device.

### BACKGROUND

In the art, a partition is typically arranged in a box of a battery pack, dividing an accommodating cavity of the box into a module area and an electrical area. A battery module (battery cells) is located in the module area, whereas the electrical area is commonly used to house electronic control components such as the Battery Management System (BMS) and Battery Disconnect Unit (BDU). A wiring harness and a copper busbar connected to the battery cells pass through the partition to reach the electrical area and connect to the electronic control components. The box and the partition of the battery packs in the art are usually manufactured either through welding or formed as a one-piece structure. When installing the wiring harness and the copper busbar, related operations are obstructed by the partition, thereby resulting in lower production efficiency.

### SUMMARY

Based on the aforementioned technical problem, it is necessary to provide a battery pack and an electronic device that facilitate the installation of the wiring harness, thereby improving the production efficiency of the battery pack.

In a first aspect, a battery pack is provided in the present disclosure. The battery pack includes: a box, having an accommodating cavity; a locking beam, detachably connected to the box, wherein the accommodating cavity is partitioned into a module area and an electrical area by the locking beam; a battery module, arranged in the module area; and a first cover, connected to the box and covering the module area; wherein a gap is defined between the locking beam and a bottom of the accommodating cavity, and a wiring harness connected to the battery module passes through the locking beam from below and enters the electrical area.

In some embodiments, the locking beam is in a shape of an elongated strip, a first end of the locking beam is detachably connected to a side of the box, and a second end of the locking beam is detachably connected to another side of the box.

In some embodiments, a sealant is arranged between at least one of a first end and a second end of the locking beam and the box.

In some embodiments, the locking beam comprises a first beam segment, a second beam segment, and a third beam segment; the first beam segment, the second beam segment, and the third beam segment are sequentially connected to each other; an end of the first beam segment away from the second beam segment is detachably connected to a side of the box, and an end of the third beam segment away from the second beam segment is detachably connected to another side of the box; and each of the end of the first beam segment and the end of the third beam segment is lower than the second beam segment, with the bottom of the accommodating cavity of the accommodating chamber as a reference.

In some embodiments, the locking beam is detachably connected to the box by means of a screw connection, a snap-fit connection, or a plug connection.

In some embodiments, the gap between the locking beam and the bottom of the accommodating cavity is an avoidance through slot, and the wiring harness connected to the battery module passes through the avoidance through slot and enters the electrical area.

In some embodiments, the first cover is connected to an upper surface of the locking beam.

In some embodiments, an adhesive is located between the first cover the battery module.

In some embodiments, the battery pack further comprises a second cover, and the second cover is connected to the box and covering the electrical area.

In some embodiments, the second cover is detachably connected to the box.

In some embodiments, the second cover is detachably connected to an upper surface of the locking beam.

In a second aspect, an electronic device is provided in the present disclosure. The electronic device includes the battery pack described above.

A battery pack and an electronic device are described herein. The battery pack includes a box, a locking beam, a battery module, and a first cover. An accommodating cavity of the box is partitioned into a module area and an electrical area by the locking beam. The first cover is connected to the box and covers the module area to protect the battery module inside. The locking beam is detachably connected to the box. A wiring harness connected to the battery module passes through the locking beam from below and enters the electrical area. Since the locking beam is detachable from the box, and wiring is allowed under the locking beam, during the assembly process of the battery pack, the wiring harness may be connected and mounted first, followed by the installation of the locking beam to the box. In this way, the routing and installation of the wiring harness can be facilitated, thereby improving production efficiency of the battery pack.

### BRIEF DESCRIPTION OF THE DRAWINGS

FIG. 1 is a perspective view illustrating a battery pack according to some embodiments of the present disclosure.
FIG. 2 is a top view illustrating a battery pack without a first cover and a second cover according to some embodiments of the present disclosure.
FIG. 3 is a perspective view illustrating the battery pack without the first cover and the second cover according to some embodiments of the present disclosure.
FIG. 4 is an enlarged view of a portion A of the battery pack shown in FIG. 3.
FIG. 5 is an exploded view of the battery pack according to some embodiments of the present disclosure.
FIG. 6 is a perspective view illustrating a locking beam according to some embodiments of the present disclosure.
FIG. 7 is a structural view illustrating an alternative locking beam according to some embodiments of the present disclosure.

Reference numerals in the drawings of the present disclosure are described as follows:
battery pack 100, box 10, locking beam 11, first beam segment 111, second beam segment 112, third beam segment 113, avoidance through slot 114, sealant 12, battery module 20, wiring harness 21, adhesive 22, first cover 31, second cover 32, module area 41, electrical area 42, first sealing strip 51, second sealing strip 52, first end P, second end Q.

### DETAILED DESCRIPTION

Unless otherwise defined, all technical and scientific terms used herein have the same meanings as those commonly understood by persons skilled in the art to which the present disclosure belongs. The terms used in the description of the present disclosure are for the purpose of describing specific embodiments only and are not intended to limit the present disclosure. The terms "comprises" and "has" as well as their variations used in the specification, claims, and the aforementioned drawings are intended to cover non-exclusive inclusions. The terms "first", "second", etc., used in the specification and claims or the aforementioned drawings are for distinguishing different objects rather than describing a specific order.

The term "embodiments" mentioned herein means that specific features, structures, or characteristics described in connection with the embodiments may be included in at least one embodiment of the present disclosure. The phrase appearing at various positions in the specification does not necessarily refer to the same embodiment, nor is it an embodiment that is independent of or exclusive from other embodiments. Those skilled in the art explicitly and implicitly understand that the embodiments described herein can be combined with other embodiments.

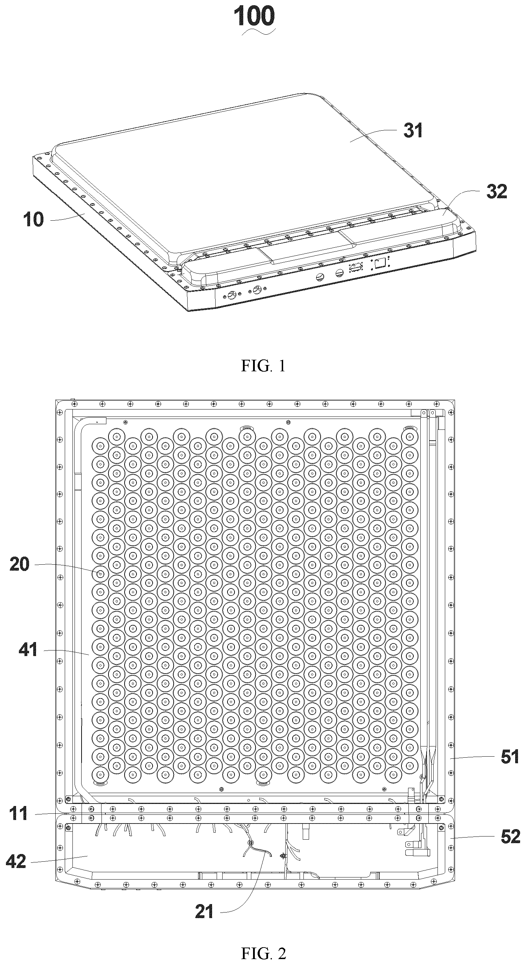

Referring to FIGS. 1-3, in some embodiments, a battery pack 100 includes a box 10, an locking beam 11, a battery module 20, a first cover 31, and a second cover 32.

The box 10 has an accommodating cavity. The locking beam 11 is detachably connected to the box 10 and partitions the accommodating cavity into a module area 41 and an electrical area 42. The battery module 20 is arranged in the module area 41. The first cover 31 is connected with the box 10 and covers the module area 41. A gap is defined between the locking beam 11 and a bottom of the accommodating cavity. A wiring harness 21, which is connected to the battery module 20, passes through the locking beam 11 from below and enters the electrical area 42.

In the present embodiment, the locking beam 11 is detachable from the box 10, and wiring is allowed under the locking beam 11. Therefore, during the assembly process of the battery pack 100, the wiring harness 21 may be connected and mounted first, followed by the installation of the locking beam 11 to the box 10. In this way, the routing and installation of the wiring harness 21 can be facilitated, thereby improving production efficiency of the battery pack 100.

The battery module 20 may include a plurality of battery cells arranged and distributed in the module area 41. The first cover 31 is connected to the box 10 and covers the module area 41 to protect the battery module 20 inside. The electrical area 42 may be used to accommodate electronic control components such as BMS and BDU. The battery module 20 is connected to the BMS and the BDU via a copper busbar and the wiring harness 21.

The locking beam 11 is in a shape of an elongated strip. Two ends of the locking beam 11 are supported on two side walls of the box 10, or supported on the bottom of the accommodating cavity of the box 10. The locking beam 11 may be bridge-like in appearance. A space for wiring is defined under the locking beam 11 and allows the wiring harness 21 and the copper busbar to pass through from below.

The locking beam 11 is detachably connected to the box 10. For instance, the locking beam 11 may be mounted to the box 10 by means of screws or a snap-fit connection.

The locking beam 11 is in a shape of an elongated strip. Two ends of the locking beam 11 are a first end P and a second end Q. The first end P is detachably connected to a side of the box 10, and the second end Q is detachably connected to another side of the box 10.

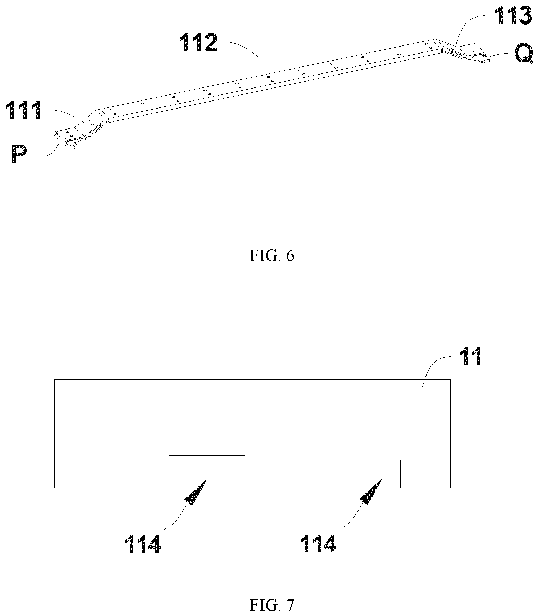

As shown in FIG. 6, in some embodiments, the locking beam 11 includes a first beam segment 111, a second beam segment 112, and a third beam segment 113. The first beam segment 111, the second beam segment 112, and the third beam segment 113 are sequentially connected to each other. An end of the first beam segment 111 away from the second beam segment 112 is detachably connected to a side of the box 10 (e.g., by a screw connection), and an end of the third beam segment 113 away from the second beam segment 112 is detachably connected to another side of the box 10 (e.g., by the screw connection). Taking the bottom of the accommodating cavity as a reference, each of the end (i.e., the first end P) of the first beam segment 111 and the end (i.e., the second end Q) of the third beam segment 113 is lower than the second beam segment 112. Each of the first end P and the second end Q being lower than the second beam segment 112 means that the second beam segment 112 is arched upward (the overall locking beam 11 may have a bow shape), providing more space for the battery module 20 and the wiring harness 21, thereby increasing the capacity of the battery pack 100 and improving the convenience of routing.

The first beam segment 111, the second beam segment 112, and the third beam segment 113 may be three sections of profile, which are welded together to form the locking beam 11. The locking beam 11 may also be formed as a one-piece profile, a die-cast, or a forging. Each of the box 10 and the locking beam 11 may be made of an aluminum profile.

In some embodiments, the locking beam 11 may be detachably connected to the box 10 by means of the screw connection, the snap-fit connection, or a plug connection. The locking beam 11 and the box 10 may be connected by screws or by fasteners, or the box 10 may be arranged with slots on the side walls, and the ends of the locking beam 11 are inserted into the slots (the plug connection) to achieve the detachable connection.

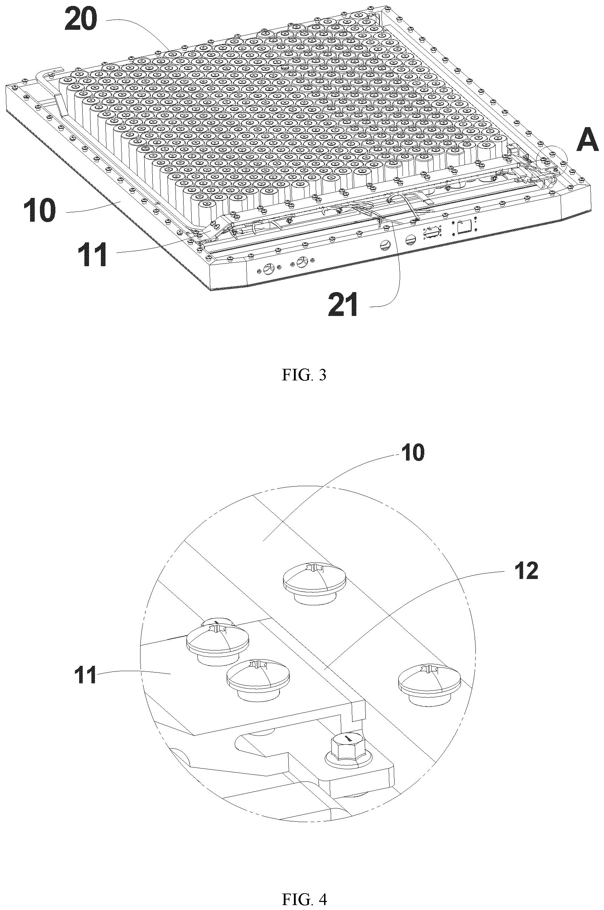

Referring to FIGS. 3-4, in some embodiments, a sealant 12 is arranged between at least one of the first end P and the second end Q of the locking beam 11 and the box 10. In this way, sealing between the locking beam 11 and the box 10 may be enhanced, thereby strengthening the protection to the battery module 20.

In some embodiments, the first cover 31 is connected to an upper surface of the locking beam 11. The first cover 31 has four edges. Three edges of the four edges are supported on the side walls of the box 10, and a fourth edge is supported on the upper surface of the locking beam 11. A first sealing strip 51 in a ring shape is arranged under the four edges of the first cover 31, thereby improving the sealing between the first cover 31 and the box 10, and between the first cover 31 and the locking beam 11.

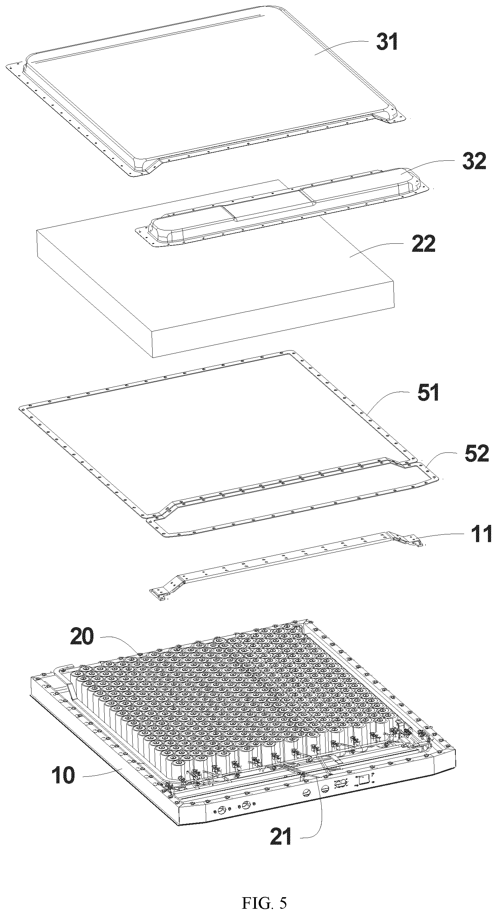

As shown in FIG. 5, in some embodiments, an adhesive 22 is arranged between the first cover 31 and the battery module 20. The adhesive 22 can enhance the positional stability of the battery module 20, thereby improving the safety of the battery. The adhesive 22 may be integrally made of a viscous material, or it may be obtained by using a foam as a main body and coating the viscous material over an outer surface of the foam.

The second cover 32 is connected to the box 10 and covers the electrical area 42, thus protecting the electrical components in the electrical area 42.

In some embodiments, the second cover 32 is detachably connected to the box 10, thereby facilitating maintenance operations of the electrical components in the electrical area 42. The connection between the second cover 32 and the box 10 may be the screw connection or the snap-fit connection. During the maintenance, the second cover 32 may first be removed, followed by inspection and repair of the circuits in the electrical area 42.

In some embodiments, the second cover 32 is detachably connected to the upper surface of the locking beam 11. For example, the detachable connection may be the screw connection or the snap-fit connection. The second cover 32 includes four edges, with three edges supported on the side walls of the box 10, and the fourth edge supported on the upper surface of the locking beam 11. A second sealing strip 52 in a ring shape may be arranged under the four edges of the second cover 32, thus enhancing the sealing between the second cover 32 and the box 10, as well as between the second cover 32 and the locking beam 11. The first cover 31, the second cover 32, and the box 10 can cooperatively define a sealed space, protecting the battery module 20 and the electrical components in the accommodating cavity. The first sealing strip 51 and the second sealing strip 52 may be non-viscous rubber rings, or of the viscous material, or obtained by using a rubber (such as silicone) as a main body and coating the viscous material over an outer surface of the rubber.

An alternative locking beam 11 is further provided in the present disclosure. In some embodiments, as shown in FIG. 7, the gap between the locking beam 11 and the bottom of the accommodating cavity of the box 10 serves as an avoidance through slot 114. The wiring harnesses 21 connected to the battery module 20 may pass through the avoidance through slot 114 and enter the electrical area 42. The avoidance through slot 114 may be arranged in a number of one or more. The locking beam 11 may be in a shape of a plate. The avoidance through slot 114 is located at a bottom of the locking beam 11, with an opening of the avoidance through slot 114 facing the bottom of the accommodating cavity of the box 10.

In some embodiments, an assembly process for the battery pack 100 is described as follows: (a) the battery module 20 is mounted in the module area 41; (b) BMS, BDU, and other electronic control components are mounted in the electrical area 42; (c) the copper busbar and the wiring harness 21 are led out from the battery module 20 and connected to the electronic control components in the electrical area 42; (d) the locking beam 11 is mounted and the sealant 12 is applied at connection points of the locking beam 11; (e) the adhesive 22 is arranged on a top of the battery module 20; (f) the first sealant 12 and second sealant 12 are laid; and (g) the first cover 31 and second cover 32 are mounted.

In summary, in the embodiments of the present disclosure, the battery pack 100 includes the box 10, the locking beam 11, the battery module 20, and the first cover 31. The locking beam 11 partitions the accommodation cavity of the box 10 into the module area 41 and the electrical area 42. The first cover 31 is connected to the box 10 and covers the module area 41 to protect the battery module 20 inside. The locking beam 11 is detachably connected to the box 10. The wiring harness 21 connected to the battery module 20 passes through the locking beam 11 from below and enters the electrical area 42. Since the locking beam 11 and the box 10 are detachable, and wiring is allowed under the locking beam 11, during the assembly process of the battery pack 100, the wiring harness 21 may be connected and mounted first, followed by the installation of the locking beam 11 onto the box 10. In this way, the routing and installation of the harness 21 can be facilitated, contributing to an increased production efficiency of the battery pack 100.

The various technical features in the above embodiments can be combined arbitrarily. For the sake of conciseness of description, not all possible combinations of these technical features are described. However, as long as the combination of these technical features does not involve contradictions, they should be considered within the scope of the present specification.

The embodiments described above express only several embodiments of the present disclosure, with descriptions that are specific and detailed. However, they should not be understood as limiting the patent scope of the present disclosure. It should be noted that, for a person skilled in the art, various transformations and modifications could be made without departing from the conception of the present disclosure , all of which fall within the scope of protection of the present disclosure. Therefore, the protection scope of the present disclosure should be subject to the appended claims.

## Claims

1. A battery pack (100), **characterized by** comprising:
a box (10), having an accommodating cavity;
a locking beam (11), detachably connected to the box (10), wherein the accommodating cavity is partitioned into a module area (41) and an electrical area (42) by the locking beam (11);
a battery module (20), arranged in the module area (41); and
a first cover (31), connected to the box (10) and covering the module area (41);
wherein a gap is defined between the locking beam (11) and a bottom of the accommodating cavity, and a wiring harness (21) connected to the battery module (20) passes through the locking beam (11) from below and enters the electrical area (42).

2. The battery pack (100) as claimed in claim 1, wherein the locking beam (11) is in a shape of an elongated strip, a first end of the locking beam (11) is detachably connected to a side of the box (10), and a second end of the locking beam (11) is detachably connected to another side of the box (10).

3. The battery pack (100) as claimed in any one of claims 1 to 2, wherein a sealant (12) is arranged between at least one of a first end (P) and a second end (Q) of the locking beam (11) and the box (10).

4. The battery pack (100) as claimed in any one of claims 1 to 3, wherein the locking beam (11) comprises a first beam segment (111), a second beam segment (112), and a third beam segment (113); the first beam segment (111), the second beam segment (112), and the third beam segment (113) are sequentially connected to each other; an end of the first beam segment (111) away from the second beam segment (112) is detachably connected to a side of the box (10), and an end of the third beam segment (113) away from the second beam segment (112) is detachably connected to another side of the box (10); and each of the end of the first beam segment (111) and the end of the third beam segment (113) is lower than the second beam segment (112), with the bottom of the accommodating cavity as a reference.

5. The battery pack (100) as claimed in any one of claims 1 to 4, wherein the locking beam (11) is detachably connected to the box (10) by means of a screw connection, a snap-fit connection, or a plug connection.

6. The battery pack (100) as claimed in any one of claims 1 to 5, wherein the gap between the locking beam (11) and the bottom of the accommodating cavity is an avoidance through slot (114), and the wiring harness (21) connected to the battery module (20) passes through the avoidance through slot (114) and enters the electrical area (42).

7. The battery pack (100) as claimed in any one of claims 1 to 6, wherein the first cover (31) is connected to an upper surface of the locking beam (11).

8. The battery pack (100) as claimed in any one of claims 1 to 7, wherein an adhesive (22) is located between the first cover (31) and the battery module (20).

9. The battery pack (100) as claimed in any one of claims 1 to 8, wherein the battery pack (100) further comprises a second cover (32), and the second cover (32) is connected to the box (10) and covering the electrical area (42).

10. The battery pack (100) as claimed in claim 9, wherein the second cover (32) is detachably connected to the box (10).

11. The battery pack (100) as claimed in any one of claims 9 to 10, wherein the second cover (32) is detachably connected to an upper surface of the locking beam (11).

12. The battery pack (100) as claimed in any one of claims 9 to 11, wherein a second sealing strip (52) in a ring shape is arranged under four edges of the second cover (32).

13. The battery pack (100) as claimed in any one of claims 1 to 12, wherein a first sealing strip (51) in a ring shape is arranged under four edges of the first cover (31).

14. The battery pack (100) as claimed in any one of claims 1 to 13, wherein the battery module (20) comprises a plurality of battery cells arranged and distributed in the module area (41).

15. An electronic device, **characterized by** comprising the battery pack (100) as claimed in any one of claims 1-14.
